# EUROPÄISCHE PATENTSCHRIFT

(11) **EP 2 810 320 B1**
(45) Veröffentlichungstag und Bekanntmachung des Hinweises auf die Patenterteilung: **08.03.2017**
(21) Anmeldenummer: 13701473.4
(22) Anmeldetag: 29.01.2013
(51) Int. Cl.: H01M 2/14, H01M 2/16, C08K 5/05, C08K 5/541, H01M 10/0525

(54) **VERFAHREN ZUR HERSTELLUNG EINES SEPARATORS ENTHALTEND EINE ORGANISCH-ANORGANISCHE HAFTVERMITTLERKOMPONENTE**
PROCESS FOR THE MANUFACTURE OF A SEPARATOR COMPRISING AN ORGANIC-INORGANIC ADHESION-PROMOTOR
PROCÉDÉ DE FABRICATION D'UN SÉPARATEUR COMPRENANT UN PROMOTEUR D'ADHÉSION ORGANIQUE-INORGANIQUE

(30) Priorität: 30.01.2012 DE 102012201251; 18.01.2013 DE 102013200722
(43) Veröffentlichungstag der Anmeldung: 10.12.2014
(73) Patentinhaber: Litarion GmbH, 01917 Kamenz (DE)
(72) Erfinder: KUBE, Michael, 45721 Haltern am See (DE); PASCALY, Matthias, 60599 Frankfurt (DE); REX, Witold Friedeman, 45549 Sprockhövel (DE); TERWONNE, Rolf-Walter, 45772 Marl (DE); HYING, Christian, 46414 Rhede (DE)
(74) Vertreter: Tostmann, Holger Carl
(86) Internationale Anmeldenummer: PCT/EP2013/051626
(87) Internationale Veröffentlichungsnummer: WO 2013/113673

(56) Entgegenhaltungen:
- WO-A2-03/073534
- WO-A2-2004/049471
- DE-C1- 19 917 186

## Beschreibung

Die Erfindung betrifft ein Verfahren zur Herstellung eines Separators umfassend die Schritte: Bereitstellen eines flächigen porösen Substrats, eines Lösungsmittels, keramischer Partikel und eines Haftvermittlers; Ansetzen eines Schlickers durch Mischen von Lösungsmittel, Haftvermittler und keramischer Partikel; Beschichten des Substrats mit dem Schlicker und thermisches Trocknen des beschichteten Substrats unter Erhalt des Separators.

Separatoren im Sinne dieser Erfindung sind poröse Schichtkörper, die zum verfahrenstechnischen Trennen von Fluiden oder zum Isolieren von Elektroden eines elektrischen Energiespeichers oder einer elektrochemischen Zelle dienen.

EP 1478451 B1 offenbart Separatoren umfassend ein organisches Trägersubstrat, welches mit einer keramischen Beschichtung versehen ist. Zu dessen Herstellung wird das Trägersubstrat in Gestalt eines Vlieses aus organischen Fasern bereitgestellt und dieses mit einem keramische Partikel enthaltenden Schlicker beschichtet und thermisch ausgehärtet. Als Haftvermittler wird ein Metalloxidsol eingesetzt. Die auf diese Weise hergestellten Separatoren weisen technisch größtenteils hervorragende Eigenschaften auf, jedoch wird die Flexibilität der Schichten durch den metalloxidischen Haftvermittler der keramischen Partikel auf einen bestimmten maximalen Biegeradius eingeschränkt.

In Hinblick auf diesen Stand der Technik ist ein Separator wünschenswert, der beispielsweise durch Einsatz organischer Haftvermittler einen erhöhten maximalen Biegeradius aufweist, jedoch weiterhin über die technisch hochwertigen Eigenschaften der in EP 1478451 B1 beschriebenen Separatoren verfügt und in einem analog zu diesem Stand der Technik ausgeführten Verfahren hergestellt werden kann.

Ein wasserbasiertes Verfahren zur Herstellung eines keramischen Separators mit organischem Haftvermittler ist aus EP 2034540 A1 bekannt. Der dort offenbarte Schichtkörper umfasst ein organisches Vlies als Trägersubstrat, welches mit einer Beschichtung aus keramischen Partikeln versehen ist. Die keramischen Partikel werden mit einem organischen Polymer an die die Fasern des Vlieses gebunden. Zur Herstellung wird ein Schlicker in Gestalt einer wässrigen Dispersion enthaltend die Keramikpartikel sowie den gelösten Binder auf das Vlies aufgetragen und getrocknet. Der Feststoffgehalt des Schlickers soll bis zu 70 Gew-% betragen.

Nachteilig bei dieser Lehre ist der geringe Gehalt an Keramik im Schlicker, der nach der Beschichtung auf dem organischen Substrat zu einem geringen Keramikanteil im Separator führt. Der auf dieses Weise gefertigte Separator ist mithin überwiegend organisch und vermag deswegen kaum hohe thermische Belastungen zu widerstehen.

In Hinblick auf diesen Stand der Technik liegt der Erfindung die Aufgabe zu Grunde ein Verfahren anzugeben, welches zur Herstellung von Separatoren mit einem höheren Keramikanteil taugt.

Gelöst wird die Aufgabe dadurch, dass bei dem eingangs genannten Verfahren als Lösungsmittel ein Gemisch aus Wasser und mindestens einer organischen Komponente eingesetzt wird; dass als Haftvermittler ein Gemisch aus Silanen und mindestens einem durch Wärmeeinwirkung vernetzbaren Acrylpolymer eingesetzt wird; dass dem Schlicker eine Carbonsäurezubereitung sowie eine silikonölfreie Entschäumerkomponente zugegeben wird.

Das Verfahren zur Herstellung eines Separators umfasst die folgenden Schritte:
a) Bereitstellen eines flächigen porösen Substrats;
b) Bereitstellen eines Lösungsmittels;
c) Bereitstellen keramischer Partikel;
d) Bereitstellen eines Haftvermittlers;
e) Ansetzen eines Schlickers durch Mischen von Lösungsmittel, Haftvermittler und keramischer Partikel;
f) Beschichten des Substrats mit dem Schlicker;
g) thermisches Trocknen des beschichteten Substrats unter Erhalt des Separators;dadurch gekennzeichnet,
h) dass als Lösungsmittel ein Gemisch aus Wasser und mindestens einer organischen Komponente eingesetzt wird;
i) dass als Haftvermittler ein Gemisch aus Silanen und mindestens einem durch Wärmeeinwirkung vernetzbaren Acrylpolymer eingesetzt wird;
k) dass dem Schlicker eine Carbonsäurezubereitung mit einem Schmelzpunkt unter 80°C zugegeben wird;
l) und dass dem Schlicker eine silikonölfreie Entschäumerkomponente zugegeben wird;
wobei die Silane ausgewählt sind aus 3-Aminopropyltriethoxysilan, 2-Aminoethyl-3-Aminopropyltrimethoxysilan, 3-Glycidyloxytrimethoxysilan, 3-Methacryloxypropyltrimethoxysilan, Vinyltriethoxysilan, Vinyltrimethoxysilan und Vinyltris(2-methoxyethoxy)silan, Methyltriethoxysilan, 3-Glycidyloxypropyltriethoxysilan;
das Acrylpolymer in Form einer Dispersion in den Herstellprozess eingebracht wird und ein Acrylpolymer auf Basis Ethylacrylat und Methylmetacrylat ist;
die Carbonsäurekomponente keine Silizium haltigen Verbindungen enthält und ein Gemisch aus Fettsäuren, Ölsäuren und/oder polymeren Carbonsäuren ist, die zu schwach sind, um Hydrolyse-Kondensation von Silanen zu katalysieren;
die Entschäumerkomponente auf einem organischen Trägermedium, insbesondere auf Paraffinöl basiert und zusätzlich einen organischen Feststoff enthält;
es sich bei dem porösen Substrat um ein Vlies aus organischen Fasern handelt, wobei die organischen Fasern ausgewählt sind aus Polyacrylnitril, Polyester, Polyimid, Polyamid, Polytetrafluorethylen, Polyethylenterephthalat oder Polyolefin;
und die keramischen Partikel eine nicht-sphärische Struktur aufweisen und ausgewählt sind aus Oxiden der Metalle Al, Zr, Si, Ti und/oder Y.

Unter einer Carbonsäurezubereitung wird im Rahmen der Erfindung ein Gemisch aus Fettsäuren, Ölsäuren, und/oder polymeren Carbonsäuren verstanden, die zu schwach sind, um Hydrolyse-Kondensation von Silanen zu katalysieren. Das Gemisch weist einen Schmelzpunkt unter 80 °C auf, bevorzugt einen Schmelzpunkt unter 45 °C, und besonders bevorzugt einen Schmelzpunkt unter 25 °C, wobei unter dem Schmelzpunkt die kleinste Temperatur zu verstehen ist, bei der die Carbonsäurezubereitung keine festen Bestandteile aufweist.

Die Fett- und/oder Ölsäuren können verzweigte oder unverzweigte Kohlenstoffketten von jeweils 8 bis 20 C-Atomen, vorzugsweise jeweils 10 bis 18 C-Atomen aufweisen.

Die polymeren Carbonsäuren sind ausgewählt aus Poly(Acrylsäure), Poly(metacrylsäure), und/oder co-Polymere, ausgewählt aus Poly(Acrylsäure-Methacrylsäure), oder deren Salze. Solche Carbonsäuren sind kommerziell erhältlich und dem Fachmann unter dem Produktfamiliennamen Dolapix bekannt, erhältlich zum Beispiel bei der Firma Zschimmer & Schwarz, oder Darvan R.T. Vanderbilt Company Inc.

Die erfindungsgemäß eingesetzte Carbonsäurezubereitung enthält keine Silizium haltigen Verbindungen.

Die Erfindung beruht auf der überraschenden Erkenntnis, dass der auf diese Weise hergestellte Separator durch den Acrylpolymer im Haftvermittler verbesserte mechanische Eigenschaften, jedoch gegenüber dem Stand der Technik eine signifikant erhöhte Fraktion an Keramik und damit an Temperaturstabilität aufweist, was durch den Silan-Anteil im Haftvermittler erzielt wird.

Untersuchungen zeigen, dass das organisch/anorganische Haftvermittler-Gemisch erst durch die Zugabe der Carbonsäurezusammensetzung und der silikonölfreien Entschäumerkomponente industriell herstellbar wird. Die Verwendung dieser beiden Verarbeitungs-Hilfsmittel gestattet erstmals die Herstellung eines organisch-anorganisch gebundenen Separators.

Der organisch-anorganisch gebundene Separator vereinigt die Vorteile rein organisch gebundener Separatoren mit denen, die rein anorganische Binder einsetzen.

Bevorzugt wird das Verfahren so geführt, dass während des thermischen Trocknens eine Aushärtung der Silane und eine Vernetzungsreaktion des Acrylpolymers erfolgt, wobei das thermische Trocknen bei einer Temperatur erfolgt, die unterhalb der Glasübergangstemperatur T_{G} des Acrylpolymers liegt. Solange die Glasübergangstemperatur des Acrylpolymers nicht überschritten wird, ist keine Versprödung desselben zu erwarten. Dadurch behält der Separator die bevorzugte Biegesteifigkeit.

Es wird ein Acrylpolymer eingesetzt, welcher im eingesetzten Lösungsmittel kaum oder bevorzugt nicht quillt und welcher nach der Vernetzung nicht schmelzbar ist. Unter Quellen ist eine Volumenzunahme des Polymers durch Eindringen der Moleküle des Lösungsmittels zu verstehen.

Es werden selbstvernetzende Acrylpolymere auf Basis von Ethylacrylat und Methylmethacrylat, die als wässrige Dispersion im Handel erhältlich sind. Ein Bespiel für eine wässrige Dispersion eines selbstvernetzenden Acrylpolymers auf Basis von Ethylacrylat und Methylmethacrylat ist Plextol BV 595 der SYNTHOMER Deutschland GmbH, Werrastr. 10, DE-45768 Marl.

Als anorganische Haftvermittlerkomponente werden ein oder mehrere Silane aus der Gruppe umfassend 3-Aminopropyltriethoxysilan, 2-Aminoethyl-3-aminopropyltrimethoxysilan, 3-Glycidyloxytrimethoxysilan, 3-Methacryloxypropyl-trimethoxysilan, Vinyltriethoxysilan, Vinyltrimethoxysilan und Vinyltris(2-methoxy-ethoxy)silan, Methyltriethoxysilan, 3-Glycidyloxypropyltriethoxysilan verwendet.

Als Haftvermittler wird ein Gemisch aus Silanen, mindestens einem durch Wärmeeinwirkung vernetzbaren Acrylpolymer und mindestens einem Silikat, insbesondere Tetraethylorthosilikat eingesetzt werden. Das Silikat stellt dann neben dem Silan eine zweite anorganische Haftvermittlerkomponente dar. Der Keramikanteil des Separators wird dadurch erhöht.

Bevorzugt wird als Haftvermittler ein Gemisch aus 25 bis 45 Gew.-% Silanen und im Rest Acrylpolymer eingesetzt.

Der keramische Feststoffanteil im Schlicker beträgt erfindungsgemäß 45 bis 60 Gew.-%, in der ausgehärteten Beschichtungsmasse unter 90 Gew.-%. Aus dem damit beschichteten Vlies entsteht mithin ein Separator mit einem Keramikanteil von bis zu 80 Gew.-%.

Es wird dem Schlicker beim Ansetzen eine siliconölfreie Entschäumerkomponente zugegeben. Es wurde nämlich gefunden, dass die üblicherweise als Industrieentschäumer eingesetzten Siliconöle (Polyorganosiloxane) Schadstellen in der Beschichtung hervorrufen. Die Zugabe eines im Lebensmittelbereich gebräuchlichen, siliconfreien Entschäumers ermöglicht die Verarbeitung des Acrylpolymeren ohne das Zurückbleiben von gasgefüllten Mizellen im Separator in Kauf nehmen zu müssen.

Als Entschäumerkomponente eignen sich besonders handelsübliche Entschäumer auf Basis eines organischen Trägermediums wie insbesondere Parafinöl, die als zusätzlich schaumbrechende Komponente organische Feststoffe enthält. Geeignete Entschäumer werden in DE 19917186 C1 und EP 0878224 A1 offenbart.

Der Anteil der Entschäumerkomponente im Schlicker braucht nicht mehr als 200 ppm betragen, um den gewünschten Effekt zu erzielen.

Bei dem eingesetzten Lösungsmittel handelt es sich um ein Gemisch aus Wasser und einer organischen Komponente. Als organische Komponente können die üblichen organischen Lösungsmittel verwendet werden. Einfachstenfalls verwendet man Alkohol, insbesondere Ethanol. Ethanol erfüllt alle technischen Vorraussetzungen, ist preisgünstig verfügbar und im Vergleich zu anderen organischen Lösungsmitteln weniger giftig.

Es wird ein Vlies als poröses Substrat eingesetzt. Ein Vlies (engl: non-woven) ist ein textiles Flächengebilde aus einer Vielzahl ungerichteter, aneinander haftender Fasern. Es wird ein Vlies aus organischen Fasern verwendet, wobei die organischen Fasern ausgewählt sind aus Polyacrylnitril, Polyester, Polyimid, Polyamid, Polytetrafluorethylen, Polyethylenterephthalat oder Polyolefin.

Es werden keramische Partikel eingesetzt, die eine nicht-sphärische Struktur aufweisen und ausgewählt sind aus Oxiden der Metalle Al, Zr, Si, Ti und/oder Y.

Es wird das Acrylpolymer in Form einer Dispersion in den Herstellprozess eingebracht. So wird der geeignete Acrylpolymer Plextol BV 595 als wässrige Dispersion ausgeliefert.

Das Ansetzen des Schlickers erfolgt insbesondere gemäß diesen Arbeitsschritten:
a) Einbringen der Carbonsäurezusammensetzung in einen ersten Teil des Lösungsmittels;
b) Dispergieren der keramischen Partikel in dem ersten Teil des Lösungsmittels unter Erhalt einer Dispersion;
c) Einbringen der Silane und des Acrylpolymeren in einen zweiten Teil des Lösungsmittels unter Erhalt eines Sols;
d) Vermischen von Dispersion und Sol unter Erhalt des Schlickers;
e) Zugabe der Entschäumerkomponente zum Schlicker.

Der Separator ist 18 bis 25 µm, bevorzugt 20 bis 23 µm stark und verfügt über eine Porosität zwischen 30 und 70 %, bevorzugt zwischen 40 und 60 %, berechnet als Quotient aus geometrischer und mit Heliumpyknometrie gemessener Dichte. Sein Keramikanteil sollte bis zu 80 Gew.-% betragen.

Der hergestellte Separator eignet sich besonders zur Isolierung von Elektroden eines elektrischen Energiespeichers oder einer elektrochemischen Zelle, insbesondere in einem Doppelschicht-Kondensator oder einem Akkumulator.

Da der organisch-anorganische Haftvermittler einen wesentlichen Aspekt des erfindungsgemäßen Separator darstellt, ist ein Gemisch,
das Wasser, Alkohol, Silane, mindestens ein durch Wärmeeinwirkung vernetzbares Acrylpolymer, eine Carbonsäurezubereitung und eine silikonölfreie Entschäumerkomponente enthält, ebenfalls Gegenstand der Erfindung.

Die Silane sind ausgewählt aus 3-Aminopropyltriethoxysilan, 2-Aminoethyl-3-Aminopropyltrimethoxysilan, 3-Glycidyloxytrimethoxysilan, 3-Methacryloxypropyltrimethoxysilan, Vinyltriethoxysilan, Vinyltrimethoxysilan und Vinyltris(2-methoxyethoxy)silan, Methyltriethoxysilan, 3-Glycidyloxypropyltriethoxysilan;
das Acrylpolymer ist eine Dispersion auf Basis Ethylacrylat und Methylmetacrylat;
die Carbonsäurekomponente enthält keine Silizium haltigen Verbindungen und ist ein Gemisch aus Fettsäuren, Ölsäuren und/oder polymeren Carbonsäuren, die zu schwach sind, um Hydrolyse-Kondensation von Silanen zu katalysieren;
die Entschäumerkomponente basiert auf einem organischen Trägermedium, insbesondere auf Paraffinöl und enthält zusätzlich einen organischen Feststoff. Ebenfalls Gegenstand der Erfindung.

Dieses Gemisch ist als organisch-anorganischer Haftvermittler insbesondere bei der Herstellung von Separatoren verwendbar.

Die Erfindung soll nun anhand von Beispielen näher erläutert werden.

### Beispiel 1 (erfindungsgemäß)

### Bereitstellen des Vlieses:

Für die Herstellung des erfindungsgemäßen Separators wird als Substrat ein Vlies aus Polyethylenterephthalat-Fasern verwendet. Die Fasern besitzen eine Stärke zwischen 1 und 15 µm, wobei das Vlies insgesamt eine Stärke 15 bis 18 µm aufweist. Das Substrat des erfindungsgemäßen Separators verfügt über Fasern, die eine Erweichungstemperatur größer 100 °C und eine Schmelztemperatur größer 110 °C aufweisen. Die Porosität des Substrates beträgt 50 bis 70 %.

### Ansetzen des Schlickers:

Es werden 13 kg eines Wasser-Ethanolgemischs im Verhältnis 70 : 30 vorgelegt, in welches 0,05 kg einer Carbonsäurezusammensetzung, die Dolapix CE 64 der Firma

Zschimmer & Schwarz GmbH & Co. KG Chemische Fabriken, DE-56112 Lahnstein, enthält, gegeben wird und darauffolgend 15 kg des Aluminiumoxids ct1200 der Firma Almatis Inc, Leetsdale, PA 15065, USA, dispergiert werden. Das resultierende Gemisch muss für mindestens 16 Stunden mit einem Rührmotor homogenisiert werden. Dazu wird nach ausreichender Rührzeit ein Sol aus einem vorgelegten Wasser-Ethanolgemisch im Verhältnis 50 : 50 (0,84 kg), Tetraethylorthosilikat (0,08 kg), Methyltriethoxysilan (0,31 kg), 3-Glycidyloxypropyltriethoxysilan (0,45 kg) und einem selbstvernetzenden Acrylpolymeren (0,67 kg), Plextol BV 595, Firma Synthomer, gegeben. Das Sol wird extern vorbereitet und nach einer Verrührzeit von mindestens 60 Minuten in den Schlicker gegeben, welcher daraufhin mindestens weitere 16 Stunden homogenisiert werden muss. Vor Beginn des Beschichtungsvorganges werden ca. 5 g an Entschäumerzusatz TEGO® Antifoam 2290 der Evonik Industries AG, Goldschmidtstr. 100, DE-45127 Essen, in den Schlicker gegeben.

### Beschichten des Vlieses mit dem Schlicker:

Ein Polyethylenterephthalat-Vlies mit einer Dicke von 18 µm und einem Flächengewicht von 6 g/m² wird mit dem oben beschriebenen Schlicker in einem kontinuierlichem Aufwalzverfahren (Bahnlaufgeschwindigkeit etwa 150 m/h, T = 150 °C) beschichtet. Daraus resultiert ein Separator mit einer Stärke von 25 µm, einem Flächengewicht von 28 g/m² und einer Porosität von ca. 55 %.

### Trocknen des Vlieses:

Die Aushärtung nach dem Beschichtungsschritt erfolgt inline in einem Umluftofen bei T ≤ 200 °C. Es kann vorteilhaft sein, den so hergestellten Separator nachträglich über 24 Stunden zu wärmebehandeln, bei T ≥ 110 °C.

### Beispiel 2 (nicht erfindungsgemäß)

### Bereitstellen des Vlieses:

Als Substrat wird ein Vlies aus Polyethylenterephthalat-Fasern bereitgestellt. Die Fasern besitzen eine Stärke von 2 bis 15 µm, wobei das Gesamtsubstrat (Vlies) eine Stärke 15 bis 18 µm aufweist. Das Substrat verfügt bevorzugt über Fasern, die eine Erweichungstemperatur größer 100 °C und eine Schmelztemperatur größer 110 °C aufweisen. Die Porosität des Substrates beträgt 50 bis 70 %.

### Ansetzen des Schlickers:

Es werden 13 kg eines Wasser-Ethanolgemischs im Verhältnis 70 : 30 vorgelegt, in welches 15 kg des Aluminiumoxids ct1200 dispergiert werden. Das resultierende Gemisch muss für mindestens 16 Stunden mit einem Rührmotor homogenisiert werden. Dazu wird nach ausreichender Rührzeit ein Sol aus einem vorgelegten Wasser-Ethanolgemisch im Verhältnis 50 : 50 (0,84 kg), Tetraethylorthosilikat (0,08 kg), Methyltriethoxysilan (0,31 kg), 3-Glycidyloxypropyltriethoxysilan (0,45 kg) und einem selbstvernetzenden Acrylpolymeren (0,67 kg), Plextol BV 595, gegeben. Das Sol wird extern vorbereitet und nach einer Verrührzeit von mindestens 60 Minuten in den Schlicker gegeben, welcher daraufhin mindestens weitere 16 Stunden homogenisiert werden muss. Vor Beginn des Beschichtungsvorganges werden ca. 5 g an Entschäumerzusatz TEGO® Antifoam 2290 in den Schlicker gegeben. Auf den Zusatz der Carbonsäurezusammensetzung, Dolapix CE 64, wird in diesem Fall verzichtet.

### Beschichten des Vlieses mit dem Schlicker:

In Abwesenheit der Carbonsäurezusammensetzung lässt sich die Viskosität des Schlickers nicht einstellen. Aufgrund der zu hohen Viskosität kann die Dispersion in einem kontinuierlichen Aufwalzverfahren nicht beschichtet werden, somit ist die erfindungsgemäße Herstellung eines keramischen Separators auf diesem Wege nicht möglich.

### Beispiel 3 (nicht erfindungsgemäß)

### Bereitstellen des Vlieses:

Es wird ein Vliessubstrat aus Polyethylenterephthalat-Fasern bereitgestellt. Die Fasern besitzen eine Stärke 2 bis 15 µm, wobei das Gesamtsubstrat eine Stärke von 15 bis 18 µm aufweist. Das Substrat verfügt bevorzugt über Fasern, die eine Erweichungstemperatur größer 100 °C und eine Schmelztemperatur größer 110 °C aufweisen. Die Porosität des Substrates beträgt 50 bis 70 %.

### Ansetzen des Schlickers:

Es werden 13 kg eines Wasser-Ethanolgemischs im Verhältnis 70 : 30 vorgelegt, in welches 0,05 kg einer Carbonsäurezusammensetzung, Dolapix CE 64, gegeben wird und darauffolgend 15 kg des Aluminiumoxids ct1200 dispergiert werden. Das resultierende Gemisch muss für mindestens 16 Stunden mit einem Rührmotor homogenisiert werden. Dazu wird nach ausreichender Rührzeit ein Sol aus einem vorgelegten Wasser-Ethanolgemisch im Verhältnis 50 : 50 (0,84 kg), Tetraethylorthosilikat (0,08 kg), Methyltriethoxysilan (0,31 kg), 3-Glycidyloxypropyltriethoxysilan (0,45 kg) und einem selbstvernetzenden Acrylpolymeren (0,67 kg), Plextol BV 595, gegeben. Das Sol wird extern vorbereitet und nach einer Verrührzeit von mindestens 60 Minuten in den Schlicker gegeben, welcher daraufhin mindestens weitere 16 Stunden homogenisiert werden muss. Auf den Zusatz an Entschäumer vor Beginn des Beschichtungsvorganges wird in diesem Fall verzichtet.

### Beschichten des Vlieses mit dem Schlicker:

Ein Polyethylenterephthalat-Vlies mit einer Dicke von 18 µm und einem Flächengewicht von 6 g/m² wird mit dem oben beschriebenen Schlicker in einem kontinuierlichem Aufwalzverfahren (Bahnlaufgeschwindigkeit etwa 150 m/h, T = 150 °C) beschichtet. Der resultierende Separator entspricht mit einer Stärke von 25 µm, einem Flächengewicht von 28 g/m² und einer Porosität von ca. 55 % dem erfindungsgemäßen Separator, jedoch ist die Beschichtungsgüte aufgrund von Fehlstellen beeinträchtigt, die durch Blasenbildung während des Herstellvorgangs erzeugt werden.

### Trocknen des Vlieses:

Die Aushärtung nach dem Beschichtungsschritt erfolgt inline in einem Umluftofen bei T ≤ 200 °C.

### Fazit

Der Vergleich der Beispiele 1, 2 und 3 zeigt, dass sich der organisch/anorganisch gebundene Separator nur unter Verwendung der Carbonsäurezusammensetzung und des Entschäumers mit der für den beabsichtigten Einsatzzweck gebotenen Güte herstellen lässt.

## Patentansprüche

1. Verfahren zur Herstellung eines Separators umfassend die folgenden Schritte:
a) Bereitstellen eines flächigen porösen Substrats;
b) Bereitstellen eines Lösungsmittels;
c) Bereitstellen keramischer Partikel;
d) Bereitstellen eines Haftvermittlers;
e) Ansetzen eines Schlickers durch Mischen von Lösungsmittel, Haftvermittler und keramischer Partikel;
f) Beschichten des Substrats mit dem Schlicker;
g) thermisches Trocknen des beschichteten Substrats unter Erhalt des Separators;
**dadurch gekennzeichnet**,
h) dass als Lösungsmittel ein Gemisch aus Wasser und mindestens einer organischen Komponente eingesetzt wird;
i) dass als Haftvermittler ein Gemisch aus Silanen und mindestens einem durch Wärmeeinwirkung vernetzbaren Acrylpolymer eingesetzt wird;
k) dass dem Schlicker eine Carbonsäurezubereitung mit einem Schmelzpunkt unter 80 °C zugegeben wird;
I) und dass dem Schlicker eine silikonölfreie Entschäumerkomponente zugegeben wird;
wobei
die Silane ausgewählt sind aus 3-Aminopropyltriethoxysilan, 2-Aminoethyl-3-Aminopropyltrimethoxysilan, 3-Glycidyloxytrimethoxysilan, 3-Methacryloxypropyltrimethoxysilan, Vinyltriethoxysilan, Vinyltrimethoxysilan und Vinyltris(2methoxyethoxy)silan, Methyltriethoxysilan, 3-Glycidyloxypropyltriethoxysilan;
das Acrylpolymer in Form einer Dispersion in den Herstellprozess eingebracht wird und ein Acrylpolymer auf Basis Ethylacrylat und Methylmetacrylat ist;
die Carbonsäurekomponente keine Silizium haltigen Verbindungen enthält und ein Gemisch aus Fettsäuren, Ölsäuren und/oder polymeren Carbonsäuren ist, die zu schwach sind, um Hydrolyse-Kondensation von Silanen zu katalysieren;
die Entschäumerkomponente auf einem organischen Trägermedium, insbesondere auf Paraffinöl basiert und zusätzlich einen organischen Feststoff enthält;
es sich bei dem porösen Substrat um ein Vlies aus organischen Fasern handelt, wobei die organischen Fasern ausgewählt sind aus Polyacrylnitril, Polyester, Polyimid, Polyamid, Polytetrafluorethylen, Polyethylenterephthalat oder Polyolefin; und
die keramischen Partikel eine nicht-sphärische Struktur aufweisen und ausgewählt sind aus Oxiden der Metalle Al, Zr, Si, Ti und/oder Y.

2. Verfahren nach Anspruch 1,
**dadurch gekennzeichnet,**
**dass** während des thermischen Trocknens eine Aushärtung der Silane und eine Vernetzungsreaktion des Acrylpolymers erfolgt, wobei das thermische Trocknen bei einer Temperatur erfolgt, die unterhalb der Glasübergangstemperatur T_{G} des Acrylpolymers liegt.

3. Verfahren nach Anspruch 1,
**dadurch gekennzeichnet,**
**dass** als Haftvermittler ein Gemisch aus Silanen, mindestens einem durch Wärmeeinwirkung vernetzbaren Acrylpolymer und mindestens einem Silikat, insbesondere Tetraethylorthosilikat eingesetzt wird.

4. Verfahren nach einem der vorhergehenden Ansprüche,
**dadurch gekennzeichnet,**
**dass** es sich bei der organischen Komponente des Lösungsmittels um Alkohol, insbesondere um Ethanol handelt.

5. Verfahren einem der vorhergehenden Ansprüche,
**dadurch gekennzeichnet,**
**dass** das Acrylpolymer in Form einer Dispersion in den Herstellprozess eingebracht wird.

6. Verfahren nach einem der vorstehenden Ansprüche,
**dadurch gekennzeichnet,**
**dass** das Ansetzen des Schlickers folgende Schritte umfasst:
a) Einbringen der Carbonsäurezusammensetzung in einen ersten Teil des Lösungsmittels;
b) Dispergieren der keramischen Partikel in dem ersten Teil des Lösungsmittels unter Erhalt einer Dispersion;
c) Einbringen der Silane und des Acrylpolymeren in einen zweiten Teil des Lösungsmittels unter Erhalt eines Sols;
d) Vermischen von Dispersion und Sol unter Erhalt des Schlickers;
e) Zugabe der Entschäumerkomponente zum Schlicker.

7. Verfahren nach einem der vorhergehenden Ansprüche,
**dadurch gekennzeichnet,**
**dass** der Anteil der Entschäumerkomponente im Schlicker weniger als 200 ppm beträgt.

8. Verfahren nach einem der vorhergehenden Ansprüche,
**dadurch gekennzeichnet,**
**dass** der Anteil der keramischen Partikel im Schlicker 45 bis 60 Gew.-% und im getrockneten Zustand mehr als 90 Gew.-% beträgt.

9. Verfahren nach einem der vorhergehenden Ansprüche,
**dadurch gekennzeichnet,**
**dass** als Haftvermittler ein Gemisch aus 25 bis 45 Gew.-% Silanen und im Rest Acrylpolymer eingesetzt wird.

10. Gemisch enthaltend Wasser, Alkohol, Silane, mindestens einen durch Wärmeeinwirkung vernetzbaren Acrylpolymer, eine Carbonsäurezubereitung und eine silikonölfreie Entschäumerkomponente
wobei
die Silane ausgewählt sind aus 3-Aminopropyltriethoxysilan, 2-Aminoethyl-3-Aminopropyltrimethoxysilan, 3-Glycidyloxytrimethoxysilan, 3-Methacryloxypropyltrimethoxysilan, Vinyltriethoxysilan, Vinyltrimethoxysilan und Vinyltris(2-methoxyethoxy)silan, Methyltriethoxysilan, 3-Glycidyloxypropyltriethoxysilan;
das Acrylpolymer eine Dispersion auf Basis Ethylacrylat und Methylmetacrylat ist; die Carbonsäurekomponente keine Silizium haltigen Verbindungen enthält und ein Gemisch aus Fettsäuren, Ölsäuren und/oder polymeren Carbonsäuren ist, die zu schwach sind, um Hydrolyse-Kondensation von Silanen zu katalysieren;
die Entschäumerkomponente auf einem organischen Trägermedium, insbesondere auf Paraffinöl basiert und zusätzlich einen organischen Feststoff enthält.

11. Verwendung des Gemisches nach Anspruch 10 als organisch-anorganischer Haftvermittler.

12. Verwendung nach Anspruch 11 bei der Herstellung von Separatoren.

## Claims

1. A method for producing a separator, said method comprising the following steps:
a) providing a two-dimensional porous substrate,
b) providing a solvent,
c) providing ceramic particles,
d) providing an adhesion promoter,
e) preparing of a slurry by a mixing of the solvent, the adhesion promoters and the ceramic particles,
f) coating the substrate with the slurry,
g) thermally drying the coated substrate while preserving the separator,
**characterized by**
h) using a mixture of water and at least one organic component as a solvent,
i) using a mixture of silanes and at least one acrylic polymer, which is crosslinkable by a heat action, as the adhesion promoter,
j) adding to the slurry a carboxylic acid preparation having a melting point below 80 °C, and
k) adding a silicone oil-free defoamer component to the slurry,
wherein the silanes are selected from a 3-aminopropyltriethoxysilane, a 2-aminoethyl-3-aminopropyltrimethoxysilane, a 3-glycidyloxytrimethoxysilane, a 3-methacryloxypropyltrimethoxysilane, a vinyltriethoxysilane, a vinyltrimethoxysilane, a vinyltris(2-methoxyethoxy)silane, a methyltriethoxysilane, and a 3-glycidyloxypropyltriethoxysilane,
wherein the acrylic polymer is introduced into the production process in the form of a dispersion and it is an acrylic polymer based on an ethyl acrylate and a methyl methacrylate,
wherein the carboxylic acid component does not contain any silicon-containing compounds and it is a mixture of fatty acids, oleic acids and / or polymeric carboxylic acids which are too weak to catalyze a hydrolysis condensation of the silanes,
wherein the defoamer component is based on an organic carrier medium, in particular on paraffin oil and it additionally contains an organic solid,
wherein the porous substrate is a nonwoven of organic fibers, the organic fibers being selected from a polyacrylonitrile, a polyester, a polyimide, a polyamide, a polytetrafluoroethylene, a polyethylene terephthalate or a polyolefin, and
wherein the ceramic particles have a non-spherical structure and are selected from oxides of the metals Al, Zr, Si, Ti and / or Y.

2. The method according to claim 1, **characterized in that** a curing of the silanes and a crosslinking reaction of the acrylic polymer occurs during the thermal drying, wherein the thermal drying occurs at a temperature which is below the glass transition temperature T_{G} of the acrylic polymer.

3. The method according to claim 1, **characterized in that** a mixture of silanes, at least one acrylic polymer crosslinkable by a heat action and at least one silicate, in particular tetraethyl orthosilicate, is used as the adhesion promoter.

4. The method according to one of the preceding claims, **characterized in that** the organic component of the solvent is an alcohol, in particular an ethanol.

5. The method according to one of the preceding claims, **characterized in that** the acrylic polymer is introduced into the production process in the form of a dispersion.

6. The method according to one of the preceding claims, **characterized in that** the preparation of the slurry comprises the following steps:
a) introducing the carboxylic acid composition into a first part of the solvent,
b) dispersing the ceramic particles in the first part of the solvent while preserving the dispersion,
c) introducing the silanes and the acrylic polymer into a second part of the solvent while preserving the sol,
d) mixing the dispersion and the sol while preserving the slurry,
e) adding the defoamer component to the slurry.

7. The method according to one of the preceding claims, **characterized in that** the proportion of the defoamer component in the slurry is less than 200 ppm.

8. The method according to one of the preceding claims, **characterized in that** the proportion of the ceramic particles in the slurry is from 45 to 60 % by weight and, in the dried state, it is more than 90 % by weight.

9. The method according to one of the preceding claims, **characterized in that** a mixture of 25 to 45 % by weight of silanes is used as the adhesion promoter and in the remainder acrylic polymer is used.

10. A mixture comprising water, an alcohol, silanes, at least one acrylic polymer which is crosslinkable by heat treatment, a carboxylic acid preparation and a silicone oil-free defoamer component,
wherein the silanes are selected from a 3-aminopropyltriethoxysilane, a 2-aminoethyl-3-aminopropyltrimethoxysilane, a 3-glycidyloxytrimethoxysilane, a 3-methacryloxypropyltrimethoxysilane,a vinyltriethoxysilane, a vinyltrimethoxysilane, a vinyltris(2-methoxyethoxy)silane,a methyltriethoxysilane, and a 3-glycidyloxypropyltriethoxysilane;
wherein the acrylic polymer is a dispersion based on an ethyl acrylate and a methyl methacrylate,
wherein the carboxylic acid component does not contain any silicon-containing compounds and it is a mixture of fatty acids, oleic acids and / or polymeric crabic acids which are too weak to catalyze a hydrolysis condensation of the silanes,
wherein the defoamer component is based on an organic carrier medium, in particular on a paraffin oil, and it additionally contains an organic solid.

11. A use of the mixture according to claim 10 as an organic-inorganic adhesion promoter.

12. The use according to claim 11 in the production of separators.

## Revendications

1. Procédé pour la fabrication d'un séparateur, comprenant les étapes suivantes, consistant à :
a) mettre à disposition un substrat poreux plat ;
b) mettre à disposition un solvant ;
c) mettre à disposition des particules céramiques ;
d) mettre à disposition un promoteur d'adhérence ;
e) préparer une barbotine par mélange du solvant, du promoteur d'adhérence et des particules céramiques ;
f) revêtir le substrat par la barbotine ;
g) sécher le substrat revêtu thermiquement avec obtention du séparateur ;
caractérisé
h) en ce qu'on utilise, comme solvant, un mélange d'eau et d'au moins un composant organique ;
i) en ce qu'on utilise, comme promoteur d'adhérence, un mélange de silanes et d'au moins un polymère d'acryle réticulable sous l'effet de la chaleur ;
k) en ce que la barbotine est additionnée d'une composition d'acide carboxylique présentant un point de fusion inférieur à 80°C ;
1) et en ce que la barbotine est additionnée d'un composant antimousse exempt d'huile de silicone ;
les silanes étant choisis parmi le 3-aminopropyltriéthoxysilane, le 2-aminoéthyl-3-aminopropyltriméthoxysilane, le 3-glycidyloxytriméthoxysilane, le 3-méthacryloxypropyltriméthoxysilane, le vinyltriéthoxysilane, le vinyltriméthoxysilane et le vinyltris(2-méthoxyéthoxy)silane, le méthyltriéthoxysilane, le 3-glycidyloxypropyltriéthoxysilane ;
le polymère d'acryle étant introduit sous forme d'une dispersion dans le procédé de fabrication et le polymère d'acryle étant à base d'acrylate d'éthyle ou de méthacrylate de méthyle ;
le composant d'acide carboxylique ne contenant pas de composés contenant du silicium et étant un mélange d'acides gras, d'acides oléiques et/ou d'acides carboxyliques polymères qui sont trop faibles pour catalyser la condensation par hydrolyse de silanes ;
le composant antimousse étant à base d'un milieu support organique, en particulier à base d'huile de paraffine et contenant en outre un solide organique ;
le substrat poreux étant un non-tissé de fibres organiques, les fibres organiques étant choisies parmi le polyacrylonitrile, le polyester, le polyimide, le polyamide, le polytétrafluoroéthylène, le poly(téréphtalate d'éthylène) ou une polyoléfine ; et les particules céramiques présentant une structure non sphérique et étant choisies parmi les oxydes des métaux Al, Zr, Si, Ti et/ou Y.

2. Procédé selon la revendication 1, **caractérisé en ce que**, pendant le séchage thermique, un durcissement des silanes et une réaction de réticulation du polymère d'acryle se produisent, le séchage thermique étant réalisé à une température qui est inférieure à la température de transition vitreuse T_{G} du polymère d'acryle.

3. Procédé selon la revendication 1, **caractérisé en ce qu'**on utilise, comme promoteur d'adhérence, un mélange de silanes et d'au moins un polymère d'acryle réticulable sous l'effet de la chaleur et d'au moins un silicate, en particulier l'orthosilicate de tétraéthyle.

4. Procédé selon l'une quelconque des revendications précédentes, **caractérisé en ce qu'**il s'agit, pour le composant organique du solvant, d'alcool, en particulier d'éthanol.

5. Procédé selon l'une quelconque des revendications précédentes, **caractérisé en ce que** le polymère d'acryle est introduit sous forme d'une dispersion dans le procédé de fabrication.

6. Procédé selon l'une quelconque des revendications précédentes, **caractérisé en ce que** la préparation de la barbotine comprend les étapes suivantes, consistant à :
a) introduire la composition d'acide carboxylique dans une première partie du solvant ;
b) disperser les particules céramiques dans la première partie du solvant avec obtention d'une dispersion ;
c) introduire les silanes et le polymère d'acryle dans une deuxième partie du solvant avec obtention d'un sol ;
d) mélanger la dispersion et le sol avec obtention de la barbotine ;
e) ajouter le composant antimousse à la barbotine.

7. Procédé selon l'une quelconque des revendications précédentes, **caractérisé en ce que** la proportion du composant antimousse dans la barbotine est inférieure à 200 ppm.

8. Procédé selon l'une quelconque des revendications précédentes, **caractérisé en ce que** la proportion de particules céramiques dans la barbotine est de 45 à 60% en poids et, à l'état séché, supérieure à 90% en poids.

9. Procédé selon l'une quelconque des revendications précédentes, **caractérisé en ce qu'**on utilise, comme promoteur d'adhérence, un mélange de 25 à 45% en poids silanes et pour le reste de polymère d'acryle.

10. Mélange contenant de l'eau, un alcool, des silanes, au moins un polymère d'acryle réticulable sous l'effet de la chaleur, une composition d'acide carboxylique et un composant antimousse exempt d'huile de silicone
les silanes étant choisis parmi le 3-aminopropyltriéthoxysilane, le 2-aminoéthyl-3-aminopropyltriméthoxysilane, le 3-glycidyloxytriméthoxysilane, le 3-méthacryloxypropyltriméthoxysilane, le vinyltriéthoxysilane, le vinyltriméthoxysilane et le vinyltris(2-méthoxyéthoxy)silane, le méthyltriéthoxysilane, le 3-glycidyloxypropyltriéthoxysilane ;
le polymère d'acryle étant une dispersion à base d'acrylate d'éthyle et de méthacrylate de méthyle ;
le composant d'acide carboxylique ne contenant pas de composés contenant du silicium et étant un mélange d'acides gras, d'acides oléiques et/ou d'acides carboxyliques polymères qui sont trop faibles pour catalyser la condensation par hydrolyse de silanes ;
le composant antimousse étant à base d'un milieu support organique, en particulier à base d'huile de paraffine et contenant en outre un solide organique.

11. Utilisation du mélange selon la revendication 10 comme promoteur d'adhérence organique-inorganique.

12. Utilisation selon la revendication 11 pour la fabrication de séparateurs.
